# EUROPEAN PATENT APPLICATION

(11) **EP 4 831 049 A1**
(43) Date of publication of application: **28.10.2026**
(21) Application number: 26172270.6
(22) Date of filing: 14.04.2026
(51) Int. Cl.: B62H 3/00, B62H 5/00

(54) **STAND FOR THE SECURE PARKING AND CHARGING OF BIKES**

(30) Priority: 23.04.2025 IT 202500009078
(71) Applicant: Ferrari, Massimo, 25040 Monticelli Brusati, (BS) (IT)
(72) Inventor: Ferrari, Massimo, 25040 Monticelli Brusati, (BS) (IT)
(74) Representative: Gualeni, Nadia

(57) **Abstract**

A bike parking stand (1) for parking bikes according to the present invention comprises: a frame (11) formed at least by an enclosure (113); an anchoring arm (12), supported by the frame (11) and rotatable about a transverse axis (X) between a locking position, in which the anchoring arm (12) is lowered, and an opening position, in which the anchoring arm (12) is raised. The anchoring arm (12) comprises a central portion ending in an anchoring end (121) and an opposite locking end (122). Advantageously, locking end (122) defines, or is provided with, a lock seat (123) and retracts at least partially into the enclosure (113) so that the lock seat (123) is arranged inside the enclosure (113). Further, the enclosure (113) is provided with an inlet (151) to an access compartment (15) in which said lock seat (123) is housed.

## Description

The present invention relates to a stand for the secure parking of bikes, mopeds, electric scooters, and other vehicles. Further, the present invention relates to a stand for the secure parking and charging of bikes, mopeds, electric scooters and other vehicles.

As is known, one of the primary requirements of users of bikes or mopeds is the identification of a secure parking place in which to position their vehicle for the time necessary, for example to do the shopping or to go to work. In public areas, in fact, parking facilities and racks provide a support for supporting the bike but no security system that prevents theft thereof. It is well known that conventional locking systems, such as chains, cables, and locks, are not entirely secure and may be easily tampered with. There are also other problems typical of current bike locking systems. For example, conventional racks do not always permit secure locking of different types of bike frame or wheel. As for parking stands, they allow on-site locking only for specially built bikes which are not adapted to most personal bikes. Further, conventional parking stands do not offer the possibility of using a locker for personal effects, or even the possibility of charging electric bikes or mopeds. An example of an anchoring stand for parking bikes is shown in document GB 2 265 346 A. This solution provides for the use of a conventional lock, inserted in a dedicated slot provided in the bike retaining arm. This solution is easily forced open, as the locking point and the lock itself are fully accessible to a wrongdoer, who has ample space to use pincers, screwdrivers, or burglary tools. An example of a parking stand is shown in document US 9,381,964 B2. This solution provides for the locking of the bike retaining arm by means of an electronic system with an alarm, easily forced open in the event of a power failure in the stand since the locking point of the arm to the stand is fully accessible to a wrongdoer, who has ample space to use pliers, screwdrivers, or other burglary tools.

The object of the present invention is to provide a secure parking stand for bikes, mopeds, electric scooters and other vehicles that is safe and easy to use and capable of securely locking all types of bikes with different frames and shapes.

Further, the object of the present invention is to provide a secure parking and charging stand for bikes, mopeds, electric scooters and other vehicles.

Such object is achieved by a secure parking stand according to claim 1. The dependent claims describe preferred embodiments of the invention.

The features and the advantages of the secure parking stand according to the present invention will become apparent from the following description, given by way of non-limiting example according to the accompanying drawings, in which:
- Figures 1A and 1B show an axonometric view and a front view, respectively, of a parking stand according to the present invention, in a first embodiment, in a locking position;
- Figure 2 shows the stand in Figure 1A in an opening position;
- Figure 3 shows the stand in Figure 1A from which the outer enclosure has been removed so as to show, diagrammatically, the components housed therein;
- Figures 4A and 4B show an axonometric view and a front view, respectively, of the stand in Figure 1A, wherein the anchoring arm is fastened in a locking position by means of a lock;
- Figures 5A and 5B show, respectively, an axonometric view and a front view of a parking stand according to the present invention, in a second embodiment, in a locking position;
- Figure 6 shows the stand in Figure 5A in an opening position;
- Figure 7 shows the stand in Figure 5A from which the outer enclosure has been removed so as to show, diagrammatically, the components housed therein;
- Figures 8A and 8B show the internal part of the stand in Figure 5A, wherein the anchoring arm is in a locking position and in an opening position, respectively;
- Figure 9 shows an axonometric view of the stand in Figure 5A wherein the anchoring arm is fastened in the locking position by means of a lock;
- Figure 10 shows an axonometric view of a parking stand according to the present invention, in a third embodiment, in a locking position.

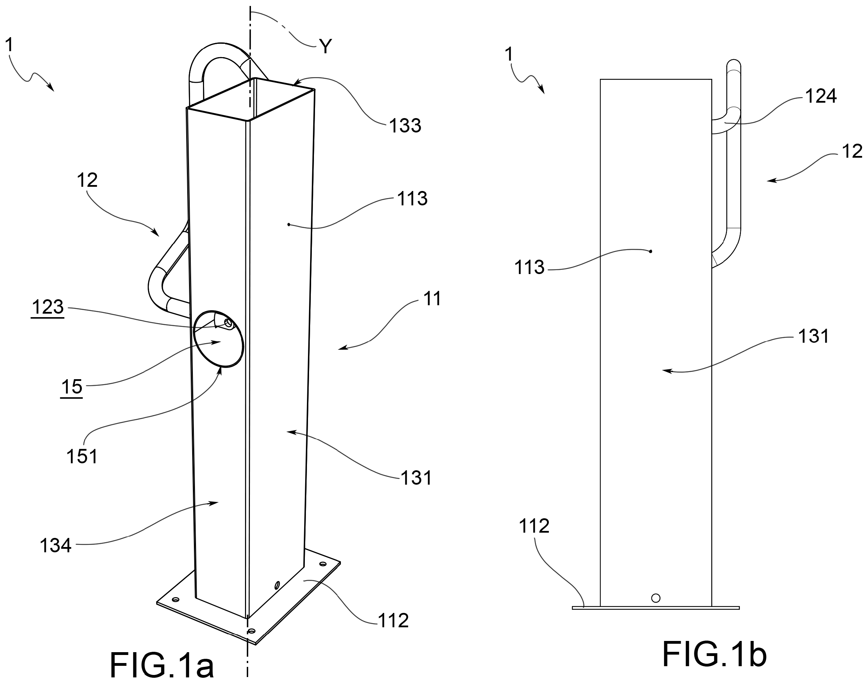

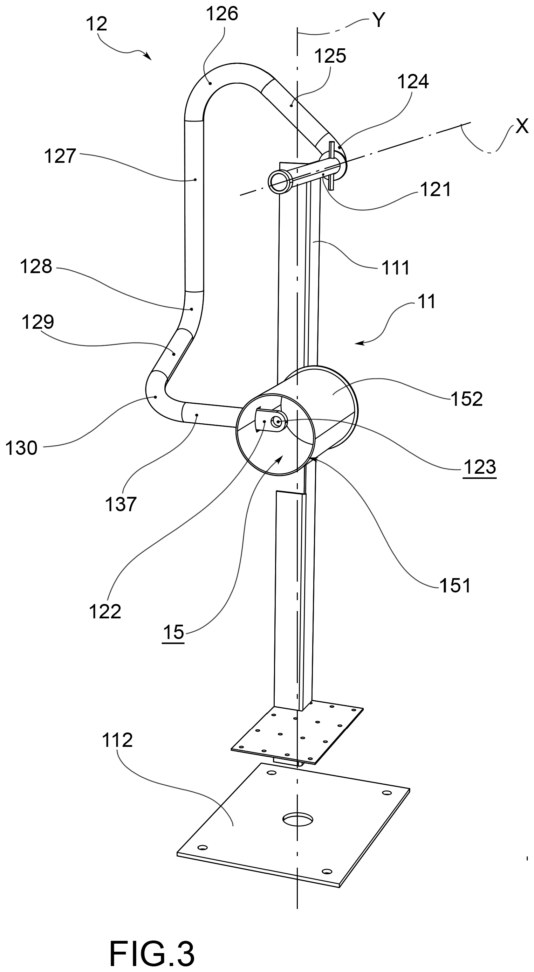

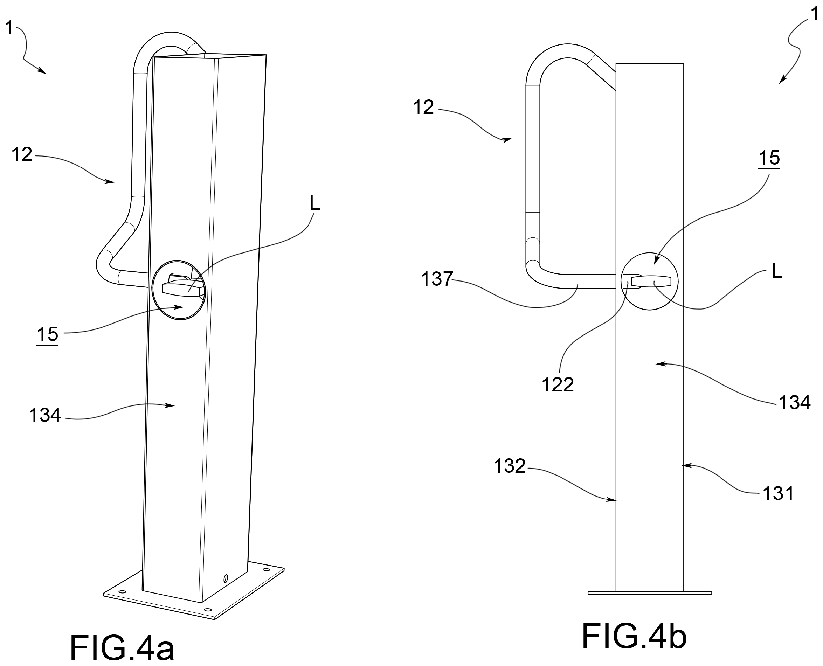

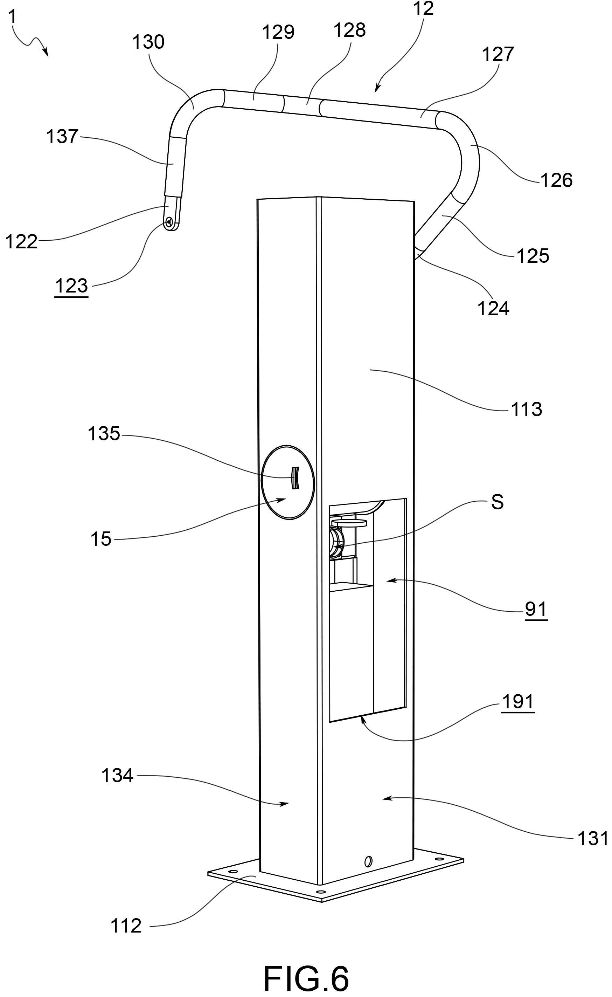

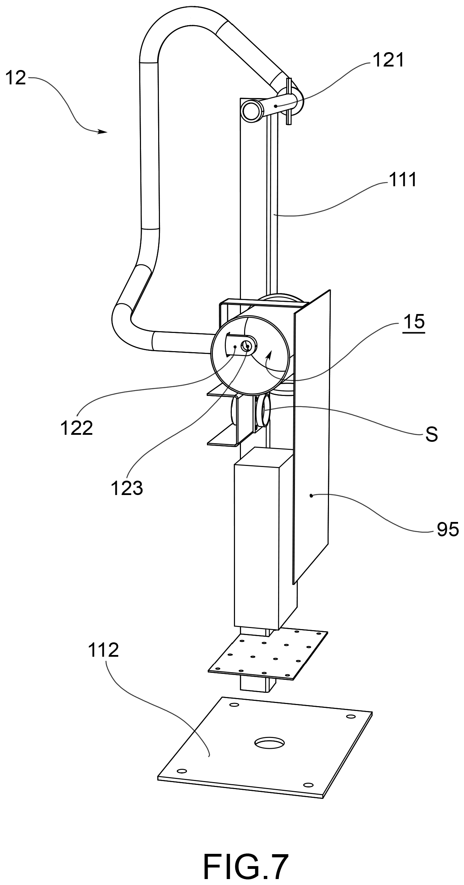

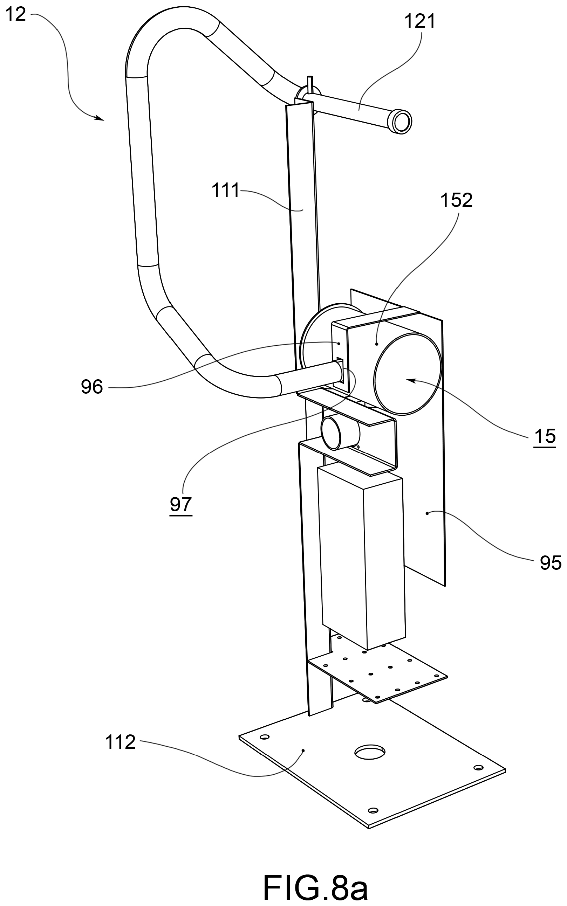

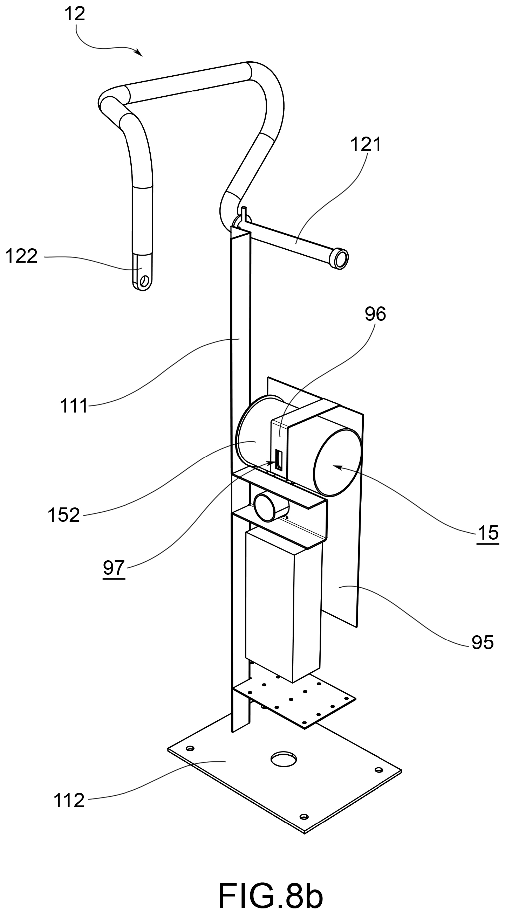

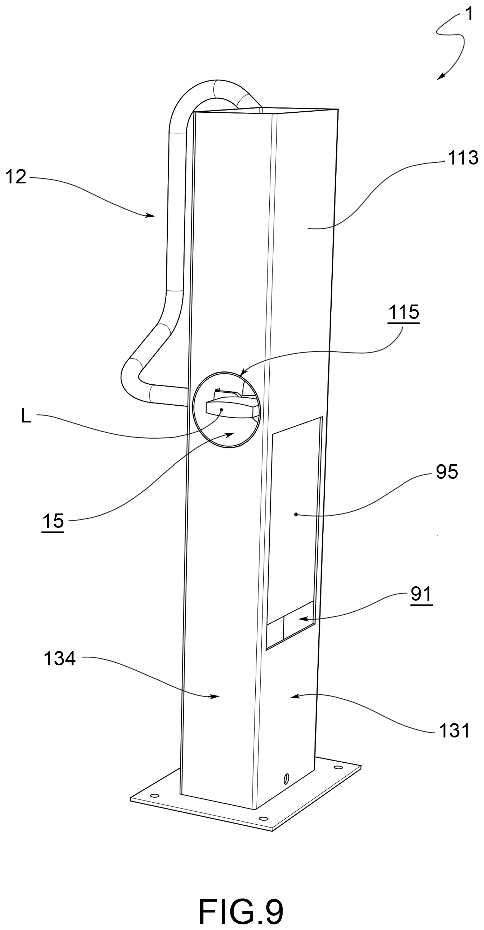

In Figures 1 to 5, a secure parking stand for bikes, mopeds, electric scooters and other vehicles is indicated by reference numeral 1, according to the present invention. In Figures 6 to 10, a secure parking stand that also provides charging for electric bikes, mopeds, electric scooters and other electric vehicles is indicated by reference numeral 1, according to the present invention.

The stand 1 comprises a frame 11 formed at least by a pillar 111 fastened to a base 112 and by an enclosure 113 that surrounds the frame 11 at least laterally, preferably also from above, and houses the mechanical components and the electrical components, where present. For example, the enclosure 113 comprises a cover 114 for closing the upper part of the stand 1.

The stand 1 extends along a longitudinal axis Y and has a parallelepiped shape. The stand 1 is provided with a front 131 and a back 132, as well as an access side 134 and an opposite side 133. Preferably, the stand 1 is provided with a pair of long sides (front 131 and back 132) and a pair of short sides (access side 134 and opposite side 133).

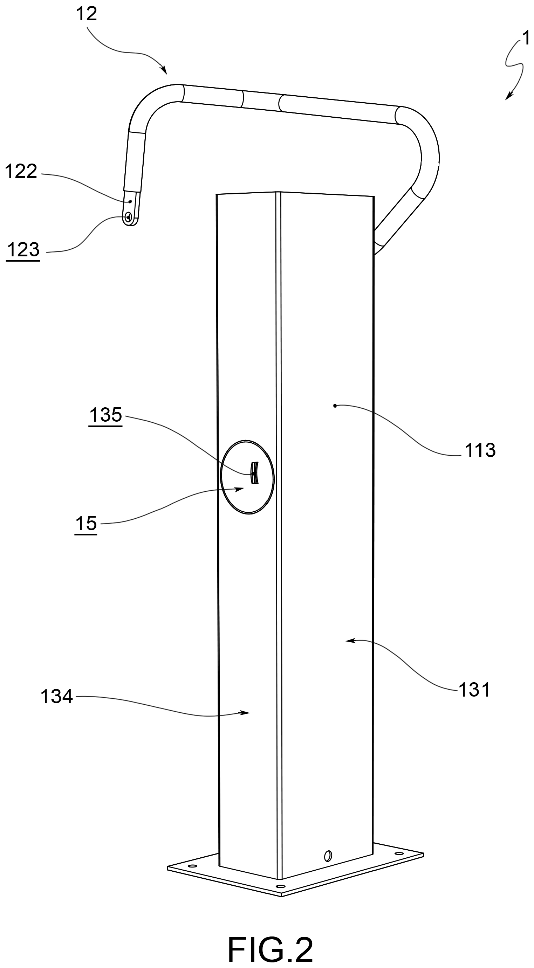

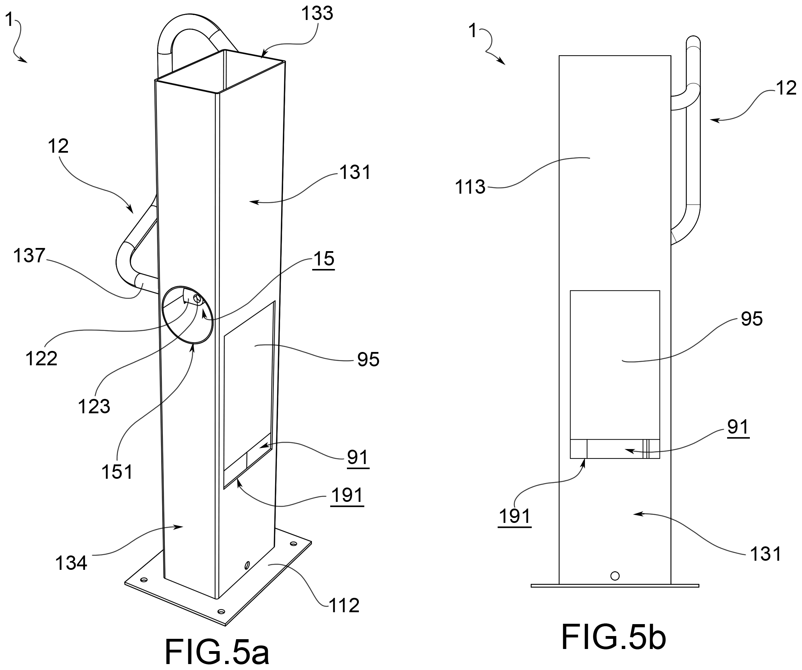

The frame 11, and preferably the pillar 111, supports an anchoring arm 12, rotatable about a transverse axis X, between a locking position (Figures 1A, 5A) and an opening position (Figures 2, 6). The anchoring arm 12 allows, in the locking position, secure retention of a bike, a moped, an electric scooter, or another like vehicle, thus preventing it from being stolen.

Preferably, the anchoring arm 12 is a tubular element, provided with a plurality of curvatures. The anchoring arm 12 comprises at least one central portion terminating at an anchoring end 121 and at an opposite locking end 122.

The anchoring end 121 defines the transverse rotation axis X about which the anchoring arm 12 rotates to switch from the locking position, in which a bike is securely retained by the stand 1, to the opening position, in which the bike may be removed from the stand 1, and vice versa.

Preferably, the anchoring end 121 is a straight tubular portion, arranged substantially parallel to one of the long sides of the stand.

The locking end 122 defines, or is provided with, a lock seat 123 adapted to provide a grip for engagement of a conventional lock L. Preferably, the anchoring end 121 is a flattened rectilinear portion, substantially a plate, arranged substantially parallel to one of the short sides of the stand 1. In an example, the lock L is part of the stand; in a different example, the lock L belongs to the user him/herself.

The central portion of the anchoring arm 12 is preferably formed by a sequence of parts, some straight and some curved. In a preferred embodiment, the central portion of the anchoring arm 12 comprises, starting from the anchoring end 121: a first curve 124 (with curvature upwards and outwards of the stand), a first segment 125 (substantially parallel to one of the short sides of the stand), a second curve 126 (downwards), a second segment 127 (of greater extension with respect to the other segments, substantially vertical and parallel to the back of the stand), a third curve 128, a third segment 129 (substantially horizontal and parallel to the back of the stand), a fourth curve 130 (with curvature towards the stand), a fourth segment 137 (substantially horizontal and parallel to one of the short sides of the stand). Advantageously, by virtue of its shape, the anchoring arm 12 permits the secure locking of different types of bike frames and wheels, and is well adapted to most personal bikes.

Advantageously, the anchoring end 121 of the anchoring arm 12 comes at least partially out of one side of the stand 1 and the locking end 122 of the anchoring arm 12 retracts at least partially into a side of the stand 1, preferably in a different side of the stand 1, preferably in a consecutive side of the stand 1. For example, the anchoring arm 12 comes out from a short side of the stand (side 133) and retracts at least partially into a long side of the stand (back 132).

In other words (as seen for example in Figures 1A, 4A, 4B, 5A, 9), the locking end 122 of the anchoring arm 12 passes through the enclosure 113 of the stand 1 so that the lock seat 123 is arranged inside the enclosure 113, namely in the inner volume of the stand 1. Therefore, the enclosure 113 is provided with an access opening 135 for the locking end 122 of the anchoring arm 12. The access opening 135 is sized to allow the passage of at least the locking end 122, or also of an end portion of the fourth segment 137 of the anchoring arm 12. For example, the access opening 135 is a slot (for example rectangular) or is a hole (for example circular). The access opening 135 is preferably adapted only for the passage of a part of the anchoring arm 12, without leaving any free space for the insertion of other elements.

The enclosure 113 is provided with an inlet 151, allowing the user to insert a hand into an access compartment 15 and connect a conventional lock L to the lock seat 123 of the anchoring arm 12 to fasten such anchoring arm 12 in the locking position (Figures 1A, 5A, 10) . Advantageously, although the lock seat 123 is arranged inside the enclosure 113 so as to be protected, it is accessible to the user by means of the access compartment 15, which has a reduced size, that is, sufficient for the use of a conventional lock L but not enough for the tampering of such lock by means of, for example, pincers or other tampering tools. In one embodiment, the inlet 151 has a maximum width of 10 cm.

The inlet 151 is arranged at a side of the enclosure 113. Preferably, the inlet 151 to the access compartment 15 is arranged on a side of the stand 1 (for example the access side 134) opposite the side of the stand 1 from which the anchoring arm 12 comes out (for example side 133).

Preferably, the access compartment 15 is defined by a housing 152 arranged inside the enclosure and preferably supported by the pillar 111 of the frame 11. The housing 152 is also provided with an access opening for the locking end 122 of the anchoring arm 12, aligned with the access opening 135 of the enclosure 113. The housing 152 is also provided with an inlet to the access compartment 15, aligned with the inlet 151 of the enclosure 113.

In an embodiment, as in Figure 1A, the housing 152 is cylinder shaped; in such an example, the access opening is arranged at the annular wall of the cylinder, and the inlet is at a circular base of the cylinder.

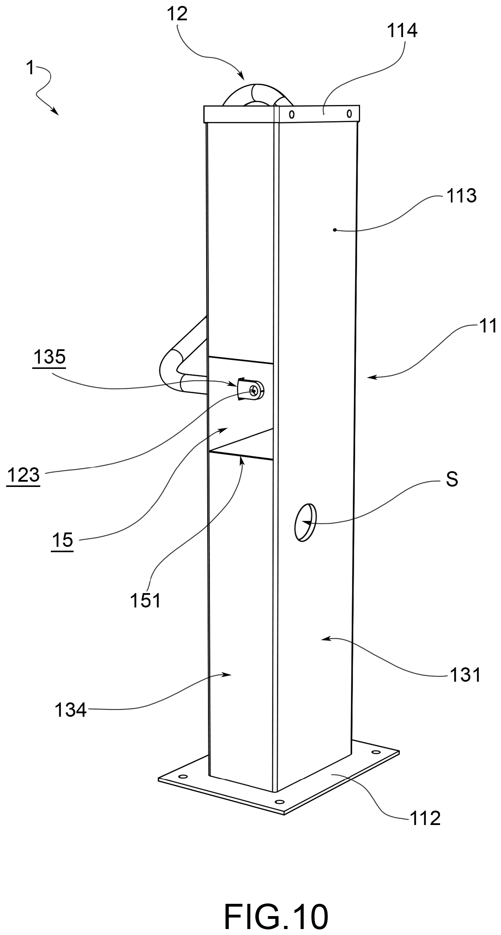

In a further embodiment, as in Figure 10, the housing 152 is rectangular or square shaped; in such an example, the access opening is arranged at one side of the square or rectangle, and the inlet is at a different side of the square or rectangle.

In an embodiment, as in Figure 10, the stand 1 is provided with an electrical socket S for charging electric bikes, mopeds, electric scooters, and other electric vehicles. For example, the electrical socket S is arranged on a side of the stand 1, for example at the front 131.

In an embodiment, as in Figures 6 to 9, the stand 1 is provided with a locker compartment 91, preferably, but not exclusively, intended to house an electrical socket S for charging electric bikes, mopeds, electric scooters, and other electric vehicles.

The enclosure 113 is provided with a locker inlet 191 allowing the user to insert a hand into a locker compartment 91, for example to connect a charging cable to an electrical socket S for charging an electric bike, or to house personal effects or battery chargers inside the stand 1.

The locker inlet 191 is arranged at a side of the enclosure 113. Preferably, the locker inlet 191 is arranged on a side of the stand 1 (for example the front 131).

In an embodiment, the locker compartment 91 is defined by the enclosure 113 itself. In another embodiment, the locker compartment 91 is defined by a locker, for example box-shaped, arranged inside the enclosure 113 and preferably supported by the pillar 111 of the frame 11.

The locker compartment 91 is closed by a sliding door 95. The door 95 slides vertically between a closing position of the locker compartment and an access position to the locker compartment 91. As can be seen in Figure 5A, in the closing position, the door 95 does not completely obstruct the locker compartment 91 but leaves an access gap of reduced size, that is to say sufficient for the charging cable to come out but not enough for the detachment and theft of the charging cable from the electrical socket S by unauthorized persons. In an embodiment, the access gap to the locker compartment 91 has a maximum height of 3 cm.

The door 95 is provided with a locking portion 96, integral with the door itself, having a slot 97 substantially corresponding to the access opening 135 for the locking end 122 of the anchoring arm 12. Thereby, the insertion of the locking end 122 of the anchoring arm 12 through the slot 97 of the locking portion 96 prevents the door 95 from sliding vertically, and thus allows fastening of the door 95 in the closing position of the locker compartment 91.

Preferably, the locking portion 96 with slot 97 is interposed between the enclosure 113 and the housing 152 defining the access compartment 15. Therefore, the locking end 122 of the anchoring arm 12 passes through, in the following order, the access opening 135 of the enclosure 113, the slot 97 of the locking portion 96, the access opening of the housing 152 and is positioned inside the access compartment 15. At this point, the user may proceed to apply a lock L by engaging it with the lock seat 123 present in the locking end 122 of the anchoring arm, fastening in position both the anchoring arm 12 and the door 95. Therefore, advantageously, the fastening in the locking position of the anchoring arm 12 simultaneously allows fastening the door 95 in the closing position.

The use of the stand 1 will now be briefly explained according to the present invention. A user interested in securely parking their own bike lifts the anchoring arm 12, preferably vertically, into the opening position so as to position the bike adjacent to the stand 1. Subsequently, the user lowers the anchoring arm 12 to the locking position until the respective locking end 122 is positioned within the access compartment 15. At this point the user applies a lock L, engaging it with the lock seat 123 present at the locking end 122 of the anchoring arm 12, fastening the anchoring arm 12 in the locking position. The bike is thus secured to the stand 1 by means of the anchoring arm 12, which retains it at least at the frame of the bike.

In an embodiment, the stand 1 is also provided, for example, with an information panel, and/or an external screen for advertising, and/or a solar panel as a source of energy.

Innovatively, a stand for bikes, mopeds, electric scooters and other vehicles according to the present invention provides a secure and easy-to-use parking solution, as well as being capable of securely locking all types of bikes with different frames and shapes.

Advantageously, a parking stand according to the present invention is also configured, in an embodiment thereof, as a charging station for electric bikes, mopeds, electric scooters and other vehicles.

Advantageously, a parking stand according to the present invention, by virtue of its minimalist design, may be positioned in front of any building without compromising the aesthetics thereof.

It is apparent that those skilled in the art may make modifications to the stand described above, all contained within the scope of protection as defined by the following claims.

## Claims

1. A bike parking stand (1) for parking bikes comprising:
- a frame (11) formed at least by an enclosure (113) defining a front (131), a back (132), an access side (134), and an opposite side (133);
- an anchoring arm (12), supported by the frame (11) and rotatable about a transverse axis (X) between a locking position, in which said anchoring arm (12) is lowered, and an opening position, in which said anchoring arm (12) is raised; wherein said anchoring arm (12) comprises a central portion ending in an anchoring end (121) and an opposite locking end (122); wherein the anchoring end (121) defines the transverse rotation axis (X) and comes at least partially out of the enclosure (113);
**characterized in that** the locking end (122) defines, or is provided with, a lock seat (123) for a lock, and **in that**, when the anchoring arm (12) is in the locking position, said locking end (122) retracts at least partially into the enclosure (113) so that said lock seat (123) is arranged inside the enclosure (113);
and **in that** the enclosure (113) is provided with an inlet (151) to an access compartment (15) in which said lock seat (123) is housed.

2. A stand (1) according to claim 1, wherein said inlet (151) to the access compartment (15) is arranged at the access side (134) and the anchoring arm (12) comes out of the opposite side (133).

3. A stand (1) according to claim 1 or 2, wherein the enclosure (113) is provided with an access opening (135) for the locking end (122) of the anchoring arm (12) positioned at the back (132).

4. A stand (1) according to any one of the preceding claims, wherein the enclosure (113) is provided with an access opening (135) for the locking end (122) of the anchoring arm (12) and said access compartment (15) is defined by a housing (152); wherein said housing (152) is arranged inside the enclosure (113), is provided with an access opening for the locking end (122) aligned with the access opening (135) of the frame (11), and is provided with an inlet to the access compartment (15) aligned with the inlet (151) of the enclosure (113).

5. A stand (1) according to any one of the preceding claims, wherein said central portion of the anchoring arm (12) is formed by an alternating sequence of curved parts and straight parts.

6. A stand (1) according to claim 5, wherein said central portion of the anchoring arm (12) is formed, starting from the anchoring end (121), by: a first curve (124) upwards and outwards; a first segment (125), a second curve (126) downwards; a second vertical segment (127), a third curve (128); a third horizontal segment (129); a fourth curve (130); a fourth horizontal segment (131).

7. A stand (1) according to any one of the preceding claims, provided with at least one electrical socket (S) for charging an electric bike.

8. A stand (1) according to any one of the preceding claims, wherein the enclosure (113) is provided with a locker inlet (191) for a locker compartment (91); said locker inlet (191) being closable at least partially by means of a door (95), housed inside the enclosure (113), said door (95) being slidable between a closing position of the access to the locker compartment (91) and an access position to the locker compartment (91).

9. A stand (1) according to claim 8, wherein said locker compartment (91) houses the electrical socket (S) for charging an electric bike.

10. A stand (1) according to claim 8 or 9, wherein said door (95) is provided with a locking portion (96), integral with the door itself, having a slot (97) for the passage of the locking end (122) of the anchoring arm (12), so that said anchoring arm (12) prevents the door (95) from sliding when the locking end (122) is inserted into the slot (97).

11. A stand (1) according to any one of the preceding claims, comprising a lock (L) engaged or engageable with the lock seat (123), and wherein, when the anchoring arm (12) is in the locking position, said lock is arranged inside the enclosure (113).
